# EUROPÄISCHE PATENTANMELDUNG

(11) **EP 4 160 151 A1**
(43) Veröffentlichungstag der Anmeldung: **05.04.2023**
(21) Anmeldenummer: 22190893.2
(22) Anmeldetag: 18.08.2022
(51) Int. Cl.: G01C 21/34, B60L 53/53, B60L 15/00, B60L 5/00

(54) **ERMITTLUNG EINER FAHRTROUTE FÜR EIN STRASSENFAHRZEUG IN EINEM STRASSENNETZ**

(30) Priorität: 29.09.2021 DE 102021210884
(71) Anmelder: Siemens Mobility GmbH, 81739 München (DE)
(72) Erfinder: Bühs, Florian, 10777 Berlin (DE); Jaeger, Florian Ansgar, 10961 Berlin (DE); Molthan, Helge, 83075 Bad Feilnbach (DE)
(74) Vertreter: Siemens Patent Attorneys

(57) **Zusammenfassung**

Die Erfindung betrifft ein computerimplementiertes Verfahren zur Ermittlung einer Fahrtroute (R) für ein Straßenfahrzeug (1) in einem Straßennetz (N). Das Straßennetz (N) umfasst elektrifizierte Streckenabschnitte (Si), entlang welcher streckenseitige Fahrleitungsanlagen (7) zur Versorgung von Straßenfahrzeugen (1) während der Fahrt mit elektrischer Energie installiert sind. Das Straßenfahrzeug (1) weist einen elektrischen Traktionsantrieb (2), einen aufladbaren Energiespeicher (3), einen Stromabnehmer (6) zur Einspeisung elektrischer Energie aus der Fahrleitungsanlage (7) und einen Verbrennungsmotor (4) auf, der entweder als alternativer Traktionsantrieb oder als Antrieb für einen Generator (5) zur Erzeugung elektrischer Energie für den elektrischen Traktionsantrieb (2) ausgelegt ist. Bei dem Verfahren werden ein Startort und ein Zielort der zu ermittelnden Fahrtroute (R) vorgegeben, von den Startort mit dem Zielort durch eine Folge von aneinandergesetzten Streckenabschnitten (si) verbindenden Routenoptionen (Rn) ermittelt, für jede der bestimmten Routenoptionen die vom Verbrennungsmotor (4) emittierte Schadstoffmenge entlang nicht elektrifizierter Streckenabschnitte (Si) einer Routenoption (Rn) berechnet und die Routenoption (Rn) mit der geringsten emittierten Schadstoffmenge als ermittelte Fahrtroute (R) ausgegeben. Hierdurch ist eine emissionsoptimierte Routenermittlung ermöglicht.

## Beschreibung

Die Erfindung betrifft ein computerimplementiertes Verfahren zur Ermittlung einer Fahrtroute für ein Straßenfahrzeug in einem Straßennetz.

Die computergestützte Ermittlung von Fahrtrouten für ein Straßenfahrzeug mittels digitaler Karten des Straßennetzes ist an sich wohl bekannt. Dabei wählt ein Nutzer über ein Endgerät, beispielsweise ein fahrzeugseitiges Navigationsgerät, einen Computerarbeitsplatz oder ein mobiles Smartphone, einen Zielort und einen Startort der zu ermittelnden Fahrtroute aus. Verfügt das Endgerät über ein Positionsbestimmungssystem, kann als Startort die aktuelle Position des Straßenfahrzeugs gewählt werden. Eine digitale Karte kann das Straßennetz als mathematischen Graphen abbilden. Die Knoten des Graphen entsprechen Orten, Kreuzungen und Verzweigungen, während die Kanten des Graphen den die Knoten in Beziehung setzenden Straßenverbindungen entsprechen. Den Kanten und Knoten können als Kartendaten Streckenlängen und Durchschnittsgeschwindigkeiten zugeordnet werden. Mittels der Kartendaten können mittels an sich bekannte Algorithmen den Startort mit dem Zielort verbindende Routenoptionen berechnet werden. Aufgrund der Vielzahl an möglichen Routenoptionen kann die zu ermittelnde Fahrtroute hinsichtlich einer oder mehrerer Nebenbedingungen optimiert werden. Hinlänglich bekannt sind beispielsweise die Nebenbedingungen der kürzesten Weglänge oder der kürzesten Reisezeit. Ebenso bekannt ist die Nebenbedingung der Vermeidung gebührenpflichtiger Straßen.

Des Weiteren ist die Nebenbedingung eines minimalen Energieverbrauchs bekannt. So schlägt beispielsweise die Offenlegungsschrift DE 10 2010 030 309 A1 ein Verfahren zur Ermittlung einer energieverbrauchsoptimierten Route eines Kraftfahrzeugs von einem Startpunkt zu einem Zielpunkt vor, wobei mindestens einer aufgrund von Kartendaten ermittelten möglichen Route vom Startpunkt zum Zielpunkt ein voraussichtlicher Energieverbrauch unter Berücksichtigung einer Bremsstrategie zugeordnet wird und unter mehreren möglichen Routen eine energieverbrauchsoptimierte Route ermittelt wird. Dabei umfasst die Bremsstrategie Regeln für das Betätigen einer Bremse und/oder einer Motorbremse und/oder einer elektromotorischen Bremse des Kraftfahrzeugs und/oder für das Ausrollenlassen des Kraftfahrzeugs und/oder für das Abstellen des Motors des Kraftfahrzeugs im Stand.

Durch die Förderung der Elektromobilität wächst die Anzahl an Straßenfahrzeugen mit elektrischem oder hybridelektrischen Antrieb und aufladbaren Energiespeichern. Aufgrund der begrenzten Ladekapazität bislang verfügbarer Energiespeicher ist es zum Absolvieren längerer Reiserouten erforderlich, bei einer oder mehreren Ladestationen zum Aufladen des Energiespeichers anzuhalten. Eine Nebenbedingung für die Routenoptimierung kann daher die rechtzeitige Erreichbarkeit einer Ladestation in Abhängigkeit des Ladezustands des Energiespeichers sein. Aus der Offenlegungsschrift DE 10 2018 214 986 A1 ist hierzu ein Verfahren zur Routenplanung eines Elektromobils bekannt. Dabei wird ein aktueller Ladezustand eines Energiespeichers des Elektromobils sowie eine geplanten Route des Elektromobils empfangen. Des Weiteren werden Ladestationsinformationen mit Positionen von Ladestationen empfangen. Daraus wird ein voraussichtlicher Verlauf des Ladezustands des Energiespeichers ermittelt. Basierend auf dem voraussichtlichen Verlauf des Ladezustands, den Ladestationsinformationen und der geplanten Route wird eine Ladestation ausgewählt. Schließlich wird mindestens eine angepasste Route über die Position der ausgewählten Ladestation basierend auf der geplanten Route ausgewählt.

Im Rahmen der Elektromobilität sind ferner Transportsysteme bekannt, bei welchen elektrifizierte Transportfahrzeuge Stromabnehmer aufweisen, mittels derer elektrische Energie aus transportwegseitig installierten Fahrleitungsanlagen einspeisbar ist. Die Offenlegungsschrift DE 10 2017 203 046 A1 ist ein elektrisch oder hybridelektrisch angetriebenes Straßenfahrzeug bekannt, welches über seinen Stromabnehmer elektrische Energie während der Fahrt aus einer Oberleitungsanlage einspeisen kann.

Der Erfindung liegt die Aufgabe zugrunde, die Routenermittlung für das bekannte Transportsystem zu optimieren.

Die Erfindung geht dabei von einem computerimplementierten Verfahren zur Ermittlung einer Fahrtroute für ein Straßenfahrzeug in einem Straßennetz aus. Dabei soll das Straßennetz elektrifizierte Streckenabschnitte, entlang welcher streckenseitige Fahrleitungsanlagen zur Versorgung von Straßenfahrzeugen während der Fahrt mit elektrischer Energie installiert sind, und nicht elektrifizierte Streckenabschnitte umfassen. Ferner soll das Straßenfahrzeug einen elektrischen Traktionsantrieb, einen aufladbaren Energiespeicher für elektrische Energie, einen Stromabnehmer zur Einspeisung elektrischer Energie aus einer Fahrleitungsanlage und einen Verbrennungsmotor, der entweder als alternativer Traktionsantrieb oder als Antrieb eines Generators zur Erzeugung elektrischer Energie für den elektrischen Traktionsantrieb ausgelegt ist, aufweisen. Dabei wird im Straßenfahrzeug entlang elektrifizierter Streckenabschnitte über den Stromabnehmer eingespeiste elektrische Energie dem Traktionsantrieb und dem Energiespeicher zugeführt. Entlang nicht elektrifizierter Streckenabschnitte wird im Straßenfahrzeug dem elektrischen Traktionsantrieb elektrische Energie aus dem Energiespeicher zugeführt und ab Erreichen seines minimalen Ladezustands der Verbrennungsmotor aktiviert, um diesen je nach Auslegung entweder als Antrieb für einen Generator oder ohne Zwischenschaltung eines Generators direkt als alternativen Traktionsantrieb zu verwenden. Das computerimplementierten Verfahren umfasst erfindungsgemäß folgende Schritte: Es wird ein Startort und ein Zielort der zu ermittelnden Fahrtroute vorgegeben. Dann werden den Startort mit dem Zielort durch eine Folge von aneinandergesetzten Streckenabschnitten verbindende Routenoptionen ermittelt. Für jede der bestimmten Routenoptionen wird dann die vom Verbrennungsmotor emittierten Schadstoffmenge entlang nicht elektrifizierter Streckenabschnitte der jeweiligen Routenoption berechnet. Schließlich wird die Routenoption mit der geringsten emittierten Schadstoffmenge als ermittelte Fahrtroute ausgegeben. Die Streckenabschnitte beginnen und enden dabei nicht nur an Knoten des Straßennetzes, insbesondere bilden Beginn und Ende einer Fahrleitungsanlage auch den Beginn und das Ende eines elektrifizierten Streckenabschnittes - unabhängig davon, ob sich dort Knoten des Straßennetzes befinden. Damit kann auch ein Beginn oder ein Ende eines nicht elektrifizierten Streckenabschnittes, wenn diesem ein elektrifizierter Streckenabschnitt vorausgeht oder nachfolgt, nicht mit einem Knoten des Straßennetzes zusammenfallen. Das Straßenfahrzeug kann vorzugsweise als schweres Nutzfahrzeug, etwa als Lastkraftwagen oder Bus, ausgebildet sein, welches für nicht elektrifizierte Streckenabschnitte einen Energiespeicher und einen Dieselgenerator zur Versorgung des Elektromotors hat. Das erfindungsgemäße Verfahren erlaubt eine Routenoptimierung unter der Nebenbedingung geringster Schadstoffemission. Dabei kann mit Vorteil entsprechend dem verwendeten Verbrennungsmotor im Hinblick auf einen bestimmten Schadstoff, etwa Feinstaub, Kohlendioxid (CO2) oder Stickoxide (NOX), oder im Hinblick auf die Summe an Schadstoffen optimiert werden. Zusätzlich kann die Fahrtroute unter Berücksichtigung weiterer Nebenbedingungen, etwa kürzester Reiseroute oder kürzeste Reisezeit, mit einstellbaren Prioritäten der Nebenbedingungen optimiert werden. Typischerweise werden die Algorithmen Routenoptionen mit möglichst vielen elektrifizierten Streckenabschnitten und möglichst wenig nicht elektrifizierten Streckenabschnitten ermitteln, um die emittierte Schadstoffmenge zu minimieren.

In einer vorteilhaften Ausführungsform des erfindungsgemäßen Verfahrens wird die entlang eines nicht elektrifizierten Streckenabschnitts emittierte Schadstoffmenge aus einer Länge eines zweiten Teilabschnittes des Streckenabschnitts, entlang dessen der Verbrennungsmotor aktiviert ist, und aus einem streckenbezogenen Schadstoffausstoß des Verbrennungsmotors berechnet. Ein nicht elektrifizierter Streckenabschnitt kann also in einen ersten Teilabschnitt, entlang dessen das Straßenfahrzeug aufgrund des Ladezustands seines Energiespeichers noch ohne Verbrennungsmotor auskommt, und in einen sich daran anschließenden zweiten Teilabschnitt, entlang dessen die Traktionsenergie - gegebenenfalls unter Zwischenschaltung eines Generators - vom Verbrennungsmotor erzeugt wird, zerfallen. Die Algorithmen zur Berechnung der emittierten Schadstoffmenge greifen hierbei auf den konfigurierten Schadstoffausstoß des Verbrennungsmotors in Masse pro zurückgelegter Streckenlänge, etwa in Milligramm pro Kilometer, sowie auf die Weglänge des zweiten Teilabschnittes zurück. Für die Länge des zweiten Teilabschnittes kann in einem vereinfachendem Ansatz ein Erfahrungswert konfiguriert sein. Bei konstantem Schadstoffausstoß können die beiden Werte einfach miteinander multipliziert werden, um die auf dem zweiten Teilabschnitt emittierte Schadstoffmenge zu ermitteln.

In einer weiteren vorteilhaften Ausführungsform des erfindungsgemäßen Verfahrens wird die Länge des zweiten Teilabschnittes aus einer Länge eines ersten Teilabschnitts des Streckenabschnitts, entlang dessen dem Traktionsantrieb Energie aus dem Energiespeicher zugeführt wird, aus einem Ladezustand des Energiespeichers am Beginn des Streckenabschnitts und aus einem streckenbezogenen Energieverbrauch des Traktionsantriebs berechnet. Im Vergleich zu dem oben erwähnten vereinfachenden Ansatz kann hierdurch die Länge des zweiten Teilabschnitts genauer berechnet werden. Hierfür greifen die Algorithmen zur Berechnung der Länge auf den Ladezustand zum Beginn des Streckenabschnittes zurück und berechnen, wie weit das Straßenfahrzeug bis zum Erreichen eines minimalen Ladezustands des Energiespeichers fahren kann. Dazu greifen die Algorithmen auf den konfigurierten Energieverbrauch des Traktionsantriebs in Energie pro zurückgelegter Streckenlänge, etwa in Kilowattstunden pro 100 Kilometer, zu. Wird in einem vereinfachenden Ansatz für den Energieverbrauch ein Durchschnittswert hinterlegt, so muss die am Beginn des Streckenabschnitts im Energiespeicher verfügbare Energie einfach durch diesen Durchschnittswert dividiert werden, um die Länge des ersten Teilabschnittes zu erhalten. Geht dem nicht elektrifizierten Streckenabschnitt ein ebenfalls nicht elektrifizierter Streckenabschnitt voraus, so kann der Energiespeicher schon zum Beginn des betrachteten Streckenabschnittes im minimalen Ladezustand sein, wenn dessen gespeicherte Energie im vorangegangenen Streckenabschnitt verbraucht wurde. Die Länge des ersten Teilabschnittes des betrachteten Streckenabschnittes ist dann Null und der zweite Teilabschnitt erstreckt sich über den gesamten betrachteten Streckenabschnitt. Wurde die im Energiespeicher vorhandene Energie auf dem vorangegangenen Streckenabschnitt nicht vollständig aufgebraucht, so ist der Ladezustand des Energiespeichers am Beginn des betrachteten Streckenabschnitts identisch mit dem Ladezustand am Ende des vorangegangenen Streckenabschnitts.

In einer weiteren vorteilhaften Ausführungsform des erfindungsgemäßen Verfahrens wird der Ladezustand des Energiespeichers am Ende eines elektrifizierten Streckenabschnitts aus dem Ladezustand am Beginn des Streckenabschnitts und der auf dem Streckenabschnitt dem Energiespeicher aus der Fahrleitungsanlage zugeführten Energie berechnet. Während der Fahrt auf dem elektrifizierten Streckenabschnitt kann Energie aus der Fahrleitungsanlage den Leistungsbedarf des Traktionsantriebs decken und zusätzlich den Energiespeicher mit einer konfigurierten Ladeleistung aufladen. Ausgehend vom Ladezustand am Beginn des Streckenabschnitts wird der Energiespeicher mit zunehmender Reisezeit auf dem Streckenabschnitt geladen, so dass dieser am Ende des Streckenabschnitts entweder seinen maximalen Ladezustand erreicht hat oder mit so viel Energie nachgeladen wurde, wie es dem Produkt aus Ladeleistung und Reisezeit entspricht.

In einer weiteren vorteilhaften Ausführungsform des erfindungsgemäßen Verfahrens wird der Schadstoffausstoß des Verbrennungsmotors und/oder der Energieverbrauch des Traktionsantriebs in Abhängigkeit einer Straßensteigung bereitgestellt. Dabei wird die auf dem nicht elektrifizierten Streckenabschnitt emittierte Schadstoffmenge zusätzlich aus einem Steigungsprofil des Streckenabschnitts, welches den Verlauf der Straßensteigung entlang des Streckenabschnitts wiedergibt, berechnet. Die Berechnung der emittierten Schadstoffmenge wird verbessert, wenn die Algorithmen berücksichtigen, dass der Schadstoffausstoß des Verbrennungsmotors bei generatorischer Energieversorgung des Traktionsantriebs als auch der Energieverbrauch des Traktionsantriebs selbst mit zunehmender Straßensteigung steigen. Beispielsweise können die Algorithmen auf in den Kartendaten enthaltene Steigungsprofile der Streckenabschnitte zugreifen. Im einfachen Fall können Durchschnittswerte für die Steigung oder das Gefälle auf einem Streckenabschnitt hinterlegt sein. Genauer wird die Berechnung, wenn bei Streckenabschnitten mit variierender Steigung und/oder variierendem Gefälle eine Unterteilung in mehrere Streckenteile mit konstanten Steigungen und/oder konstantem Gefälle vorgenommen wird und die Schadstoffmengen für jeden Streckenteil gesondert unter Berücksichtigung seiner Steigung bzw. seines Gefälle berechnet wird.

In einer weiteren vorteilhaften Ausführungsform des erfindungsgemäßen Verfahrens wird der Schadstoffausstoß des Verbrennungsmotors und/oder der Energieverbrauch des Traktionsantriebs in Abhängigkeit einer Fahrgeschwindigkeit des Straßenfahrzeugs bereitgestellt. Dabei wird die entlang des nicht elektrifizierten Streckenabschnitts emittierte Schadstoffmenge aus einem Geschwindigkeitsprofil des Streckenabschnitts, welches den Verlauf der erwarteten Fahrgeschwindigkeit des Straßenfahrzeugs auf dem Streckenabschnitt wiedergibt, berechnet. Die Berechnung der emittierten Schadstoffmenge wird ebenfalls verbessert, wenn die Algorithmen berücksichtigen, dass der Schadstoffausstoß des Verbrennungsmotors bei generatorischer Energieversorgung des Traktionsantriebs als auch der Energieverbrauch des Traktionsantriebs selbst mit zunehmender Fahrgeschwindigkeit steigen. Ein Geschwindigkeitsprofil kann beispielsweise vorliegen, wenn entlang eines Streckenabschnitts abschnittweise durch Schilder oder Wechselverkehrszeichen auferlegte Geschwindigkeitsbeschränkungen bestehen. Die Berechnungen des Schadstoffausstoßes beziehungsweise des aus dem Energiespeicher entnommenen Energieverbrauchs des Traktionsantriebs können dann gemäß dem hinterlegten Geschwindigkeitsprofil abschnittsweise unter Berücksichtigung der jeweils erwarteten Fahrgeschwindigkeit berechnet werden.

In einer weiteren vorteilhaften Ausführungsform des erfindungsgemäßen Verfahrens wird das Geschwindigkeitsprofil des Streckenabschnitts in Abhängigkeit der aktuellen Verkehrssituation auf dem Streckenabschnitt vorgegeben. Greifen die Algorithmen auf aktuelle Verkehrsdaten in Form von Geschwindigkeitsprofilen der Streckenabschnitte zu, so kann die Berechnung der emittierten Schadstoffmenge weiter verfeinert werden. So können durch Baustellen oder Unfälle oder hohe Verkehrsaufkommen den Verkehrsfluss entlang eines Streckenabschnittes beeinträchtigen und zu Geschwindigkeitsprofilen, beispielsweise mit zähfließendem oder stockendem Fahrzeugverkehr, führen. Die Berücksichtigung von die aktuelle Verkehrssituation repräsentierenden Verkehrsdaten in Form von Geschwindigkeitsprofilen führt damit zu einer weiteren Verbesserung bei der Berechnung der entlang einer Routenoption emittierten Schadstoffmenge.

In einer weiteren vorteilhaften Ausführungsform des erfindungsgemäßen Verfahrens wird für jede der bestimmten Routenoptionen zusätzlich die vom Verbrennungsmotor emittierte Schadstoffmenge entlang elektrifizierter Streckenabschnitte einer Routenoption aus einem vorgegebenen Nutzungsgrad der Fahrleitungsanlage durch das Straßenfahrzeug berechnet. Durch Ansetzen eines Nutzungsgrades wird berücksichtigt, dass ein Straßenfahrzeug auch auf einem elektrifizierten Streckenabschnitt Schadstoffe emittieren kann, wenn es dort dem Verbrennungsmotor aktivieren muss. Dies kann beispielsweise auftreten, wenn das Straßenfahrzeug aufgrund von Überhol- oder Ausweichmanövern auf mehrstreifigen Fahrbahnen den Stromabnehmer von der Oberleitung nimmt und die Traktionsenergie dann nicht oder nicht mehr aus dem Energiespeicher zugeführt werden kann. Durch diesen Umstand sind auch elektrifizierte Streckenabschnitte mit der Emission einer Schadstoffmenge des Verbrennungsmotors belastet, was in den Berechnungsalgorithmen durch einen durchschnittlichen Nutzungsgrad der Fahrleitungsanlage berücksichtigt wird. Der Nutzungsgrad kann für jeden elektrifizierten Streckenabschnitt separat oder allgemein als Wert pro Kilometer hinterlegt werden.

In einer weiteren vorteilhaften Ausführungsform des erfindungsgemäßen Verfahrens wird davon ausgegangen, dass am Beginn wenigstens eines Teils von Streckenabschnitten des Straßennetzes straßenseitige Ladestationen installiert sind, an welchen Energiespeichern von Straßenfahrzeugen im Stillstand Energie zugeführt werden kann. Dadurch ist die vom Verbrennungsmotor emittierte Schadstoffmenge entlang eines durch Aufladen des Energiespeichers verkürzten, zweiten Teilabschnitts eines nicht elektrifizierten Streckenabschnitts reduzierbar. Bei der Berechnung der Schadstoffemission entlang einer Routenoption wird dabei die Lademöglichkeit des Energiespeichers an entlang dieser Routenoption installierten Ladestationen berücksichtigt. Mit der Fahrtroute werden die zur Reduzierung der Schadstoffemissionen durch das Straßenfahrzeug zu nutzenden Ladestationen ausgegeben. Hierdurch kann berücksichtigt werden, dass der Energiespeicher des Straßenfahrzeugs nicht nur im Fahrleitungsbetrieb über den Stromabnehmer geladen werden kann, sondern auch im Stillstand an einer Ladestation. Je nach Ausgestaltung der Ladestation kann die Energieübertragung beispielsweise über ein Ladekabel oder über den Stromabnehmer oder induktiv erfolgen. Vorzugsweise sind Ladestationen auf nicht elektrifizierten Strecken entscheidend, weshalb der Ort einer solchen Ladestation - unabhängig davon, ob dieser mit einem Knoten des Straßennetzes zusammenfällt - als Beginn eines entsprechenden nicht elektrifizierten Streckenabschnittes gesetzt wird. Durch Nutzung der Lademöglichkeit kann das Straßenfahrzeug einen längeren ersten Teilabschnitt des an der Ladestation beginnenden, nicht elektrifizierten Streckenabschnittes durch Energieversorgung aus dem Energiespeicher zurücklegen, was den zweiten Teilabschnitt und damit die für den gesamten Streckenabschnitt anzusetzende Schadstoffemission verringert. Je nach zu ermittelnder Fahrtroute kann sich die Nutzung von Ladestationen auf eine Minimierung der emittierten Schadstoffmenge auswirken oder auch nicht. Falls sich die Nutzung einer oder mehrerer Ladestationen auf die Routenoptimierung auswirkt, werden diese dem Nutzer zusammen mit der ermittelten Fahrtroute ausgegeben.

Die Erfindung betrifft ferner ein Daten verarbeitendes System mit einem Computer oder Computernetzwerk zur Durchführung eines Verfahrens nach einem der Ansprüche 1 bis 9.

Die Erfindung betrifft außerdem ein Computerprogramm-Produkt mit Instruktionen, welche bei Ausführung durch einen Computer oder ein System, den Computer oder das System dazu veranlassen, das Verfahren nach einem der Ansprüche 1 bis 9 durchzuführen.

Die Erfindung betrifft noch ein computerlesbares Speichermedium, auf welchem Instruktionen gespeichert sind, welche bei Ausführung durch einen Computer oder ein System, den Computer oder das System dazu veranlassen, das Verfahren nach einem der Ansprüche 1 bis 9 durchzuführen.

Die Erfindung betrifft schließlich einen Datenstrom, welcher repräsentativ für ein Computerprogramm-Produkt nach Anspruch 11 ist.

Weitere Eigenschaften und Vorteile der Erfindung ergeben sich ausnachfolgender Beschreibung eines Ausführungsbeispiels anhand der Zeichnungen, in deren
- FIG 1: ein Ausschnitt eines Straßennetzes mit einer Fahrtroute,
- FIG 2: ein Straßenfahrzeug auf einem elektrifizierten Straßenabschnitt,
- FIG 3: ein Ablaufdiagramm des erfindungsgemäßen Verfahrens und
- FIG 4: der Ladezustand des Energiespeichers im Verlauf der Fahrtroute
- schematisch: veranschaulicht sind.

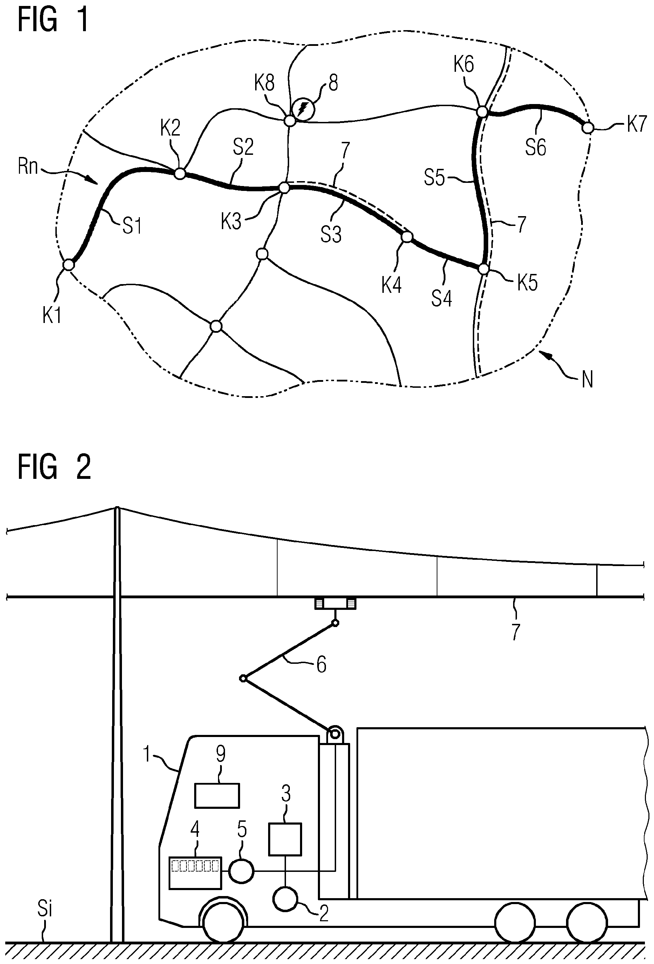

Die erfindungsgemäß emissionsoptimierte Routenermittlung geht von einem Straßennetz N aus, wie ausschnittsweise in FIG 1 dargestellt, welches eine Vielzahl an Knoten Kj, wobei j der Nummerierungsindex aller Knoten sei, und diese verbindende Streckenabschnitte Si, wobei i der Nummerierungsindex aller Streckenabschnitte sei, aufweist. Ein Teil der Streckenabschnitte Si ist elektrifiziert, indem entlang dieser streckenseitige Fahrleitungsanlagen 7 installiert sind, die in FIG 1 durch eine Strichlinie dargestellt sind. Streckenabschnitte Si sind in FIG 1 durch schmale Volllinien dargestellt. FIG 1 zeigt eine ermittelte Routenoption Rn für die zu ermittelnde Fahrtroute R, welche die Knoten K1 und K7 über K2 bis K6 verbindet und aus einer Folge der aneinandergesetzten Streckenabschnitte S1 bis S6 zusammengesetzt ist. Die Routenoption Rn ist in FIG 1 durch eine breite Volllinie veranschaulicht. Am Knoten K8 ist eine Ladestation 8 installiert.

Die erfindungsgemäß emissionsoptimierte Routenermittlung geht ferner gemäß FIG 2 von einem Straßenfahrzeug 1 aus, beispielsweise einem Sattelzug, das einen elektrischen Traktionsantrieb 2 aufweist. Zur Versorgung des Traktionsantriebs 2 mit elektrischer Energie weist das Straßenfahrzeug 1 einen aufladbaren Energiespeicher 3 sowie einen von einem Verbrennungsmotor 4 angetriebenen Generator 5 zur Erzeugung elektrischer Energie auf. In einem hier nicht dargestellten Ausführungsbeispiel kann das Straßenfahrzeug 1 neben dem elektrischen Traktionsantrieb 1 direkt von einem Verbrennungsmotor als alternativen Traktionsantrieb, also ohne Zwischenschaltung eines Generators, angetrieben werden. Zusätzlich weist das Straßenfahrzeug 1 einen Stromabnehmer 6 zur Einspeisung elektrischer Energie aus der Fahrleitungsanlage 7 entlang eines elektrifizierten Streckenabschnitts Si auf. Der Stromabnehmer 6 kann sich über seinen Hauptrahmen am Fahrzeuggestell des Straßenfahrzeugs 1 abstützen und kann ein aufstell- und absenkbares Traggestänge aufweisen, welches eine Kontaktwippe mit Schleifleisten zur Kontaktierung einer Fahrleitung der Fahrleitungsanlage 7 trägt. Die Fahrleitungsanlage 7 kann als zweipolige Oberleitungsanlage ausgebildet sein, deren Fahrleitung durch zwei als Hin- und Rückleiter ausgeführte und oberhalb der Fahrbahn des elektrifizierten Streckenabschnittes Si aufgehängte Fahrdrähte gebildet sind. Um das Straßenfahrzeug 1 während der Fahrt infrastrukturseitig mit Energie zu versorgen, sind aber auch andere konduktive und induktive Fahrleitungsanlagen denkbar, beispielsweise könnte die Fahrleitung seitlich neben der Fahrbahn angeordnet oder in die Fahrbahndecke eingebettet sein. Auf elektrifizierten Streckenabschnitten Si kann die aus der Fahrleitungsanlage 7 eingespeiste Energie neben der Traktionsversorgung zusätzlich zum Aufladen des Energiespeichers 3 genutzt werden. Dem Straßenfahrzeug 1 kann infrastrukturseitig aber auch Energie an Ladestationen 8 im Stillstand zugeführt werden, indem dort der Energiespeicher 3 aufgeladen wird. Je nach Ausgestaltung der Ladestation 8 kann dies über den Stromabnehmer 6 oder über ein nicht dargestelltes Ladekabel oder aber durch induktive Übertagung erfolgen. Ziel des erfindungsgemäßen Verfahrens ist es, eine Fahrtroute zu ermitteln, auf der die vom Verbrennungsmotor 4, beispielsweise ein Diesel-, Otto- oder Wasserstoffmotor, emittierte Schadstoffmenge optimiert - also minimiert - ist.

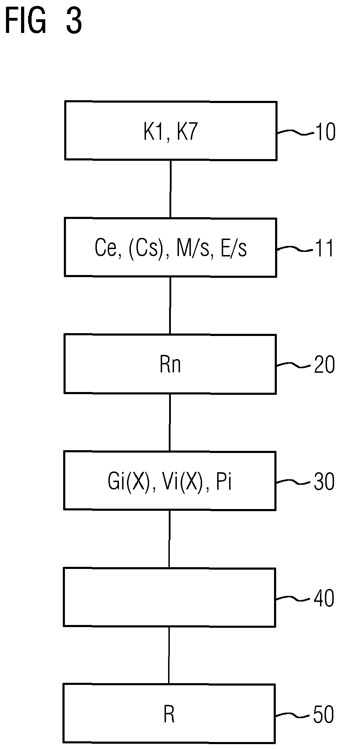

Das erfindungsgemäße Verfahren ist computerimplementiert und umfasst gemäß FIG 3 mehrere Schritte, die vollständig oder wenigstens teilweise durch den Ablauf von einem Algorithmen eines Computerprogramm-Produkts ausgeführt werden. Hierzu dient ein Daten verarbeitendes System mit einem Computer oder Computernetzwerk, welches zur Ausführung der Instruktionen des Computerprogramms elektronische Rechen- und Speichereinheiten aufweist. Das Computerprogramm kann dem System über ein computerlesbares Speichermedium oder beim Herunterladen aus dem Internet über einen entsprechenden Datenstrom bereitgestellt werden. Das System könnte beispielsweise in einem Fahrzeuggerät 9 zur Navigation beziehungsweise Zielführung des Straßenfahrzeugs 1 integriert sein.

In einem ersten Schritt 10 wird ein Startort K1 und ein Zielort K7 der zu ermittelnden Fahrtroute R vorgegeben. In einem Zusatzschritt 11 können neben der Nebenbedingung Ce der geringsten Schadstoffemission weitere bei der Routenermittlung zu berücksichtigende Nebenbedingungen vorgegeben werden, etwa die Nebenbedingung Cs der kürzesten Wegstrecke oder die Nebenbedingung Ct der geringsten Reisezeit, und wie diese untereinander berücksichtigt werden sollen. Ebenso kann hier eingegeben werden, welchen streckenbezogenen Schadstoffausstoß M/s(G, V) der im Straßenfahrzeug 1 eingebaute Verbrennungsmotor 4 in Abhängigkeit der zu überwindenden Straßensteigung G und der gefahrenen Geschwindigkeit V besitzt und im Hinblick auf welche Schadstoffe, die Fahrtroute R optimiert werden soll. Des Weiteren kann hier eingegeben werden, welchen streckenbezogenen Energieverbrauch E/s(G, V) der im Straßenfahrzeug 1 eingebaute Traktionsantrieb 2 in Abhängigkeit der zu überwindenden Straßensteigung G und der gefahrenen Geschwindigkeit V besitzt. In einem nächsten Schritt 20 werden mögliche Routenoptionen Rn ermittelt, die den Startort K1 mit dem Zielort K7 über eine Folge von aneinandergesetzten Streckenabschnitten Si verbinden; n sei der Zählindex aller ermittelten Routenoptionen Rn. Für jede der ermittelten Routenoptionen Rn wird dann in einem weiteren Schritt 30 die vom Verbrennungsmotor 4 emittierten Schadstoffmenge der jeweiligen Routenoption Rn berechnet. In einem anschließenden Schritt 40 wird die Routenoption Rn mit der geringsten emittierten Schadstoffmenge ermittelt und in einem abschließenden Schritt als ermittelte Fahrtroute R ausgegeben.

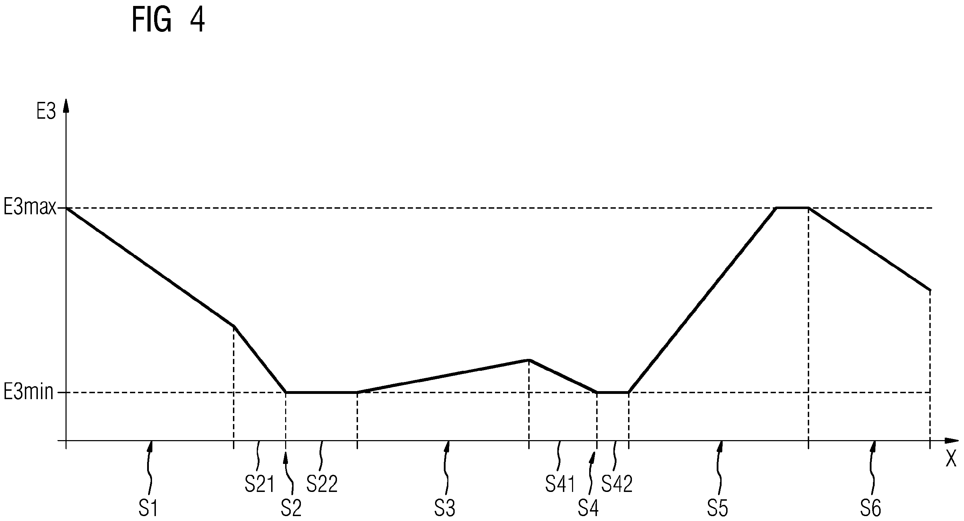

Schritt 30 des erfindungsgemäßen Verfahrens wird nun anhand der in FIG 1 dargestellte Routenoption Rn näher erläutert durch den in FIG 4 dargestellten Verlauf des Ladezustands E3 des Energiespeichers 3 entlang dieser Routenoption Rn. Die zu bewertende Routenoption R setzt sich zusammen aus zwei nicht elektrifizierten Streckenabschnitten S1 und S2, einem elektrifizierten Streckenabschnitt S3, einem weiteren nicht elektrifizierten Streckenabschnitt S4, einem weiteren elektrifizierten Streckenabschnitt S5 und schließt mit einem nicht elektrifizierten Streckenabschnitt S6 ab. Die Ermittlung einer solchen Folge von Streckenabschnitten S1 bis S6 erfolgt gemäß bekannter Algorithmen von Navigationsverfahren und greift auf Kartendaten einer digitalen Karte des Straßennetzes N zu. Dort sind zu jedem Streckenabschnitt Si die zugehörige Länge Li abgelegt. Zusätzlich können dort abgelegt sein oder aus anderer Quelle erschlossen werden ein zugehöriges Steigungsprofil Gi(X) der Straßenneigung bzw. des Straßengefälles als Funktion des Ortes X auf dem Streckenabschnitt Si sowie optional ein Geschwindigkeitsprofil Vi(X) der auf dem Streckenabschnitt Si am Ort X zugelassenen Fahrgeschwindigkeit V.

Am Beginn des Streckenabschnittes S1 liege ein maximaler Ladezustand E3max des Energiespeichers 3 vor. Entlang des nicht elektrifizierten Streckenabschnitts S1 hat der Traktionsantrieb 2 einen streckenbezogenen Energieverbrauch E/s entsprechend der auf diesem Streckenabschnitt S1 herrschenden Straßensteigung G und der Fahrgeschwindigkeit V des Straßenfahrzeugs 1. Im dargestellten Ausführungsbeispiel seien diese konstant, so dass auch die pro Kilometer vom Traktionsantrieb 2 verbrauchte Energie konstant ist. Da diese aus dem Energiespeicher 3 zugeführt wird, nimmt dessen Ladezustand E3 linear ab. Aufgrund der Länge L1 des Streckenabschnitts S1 ist am Ende des Streckenabschnitts S1 der minimale Ladezustand E3min noch nicht erreicht. Auf diesem Streckenabschnitt S1 wurde der Verbrennungsmotor 4 nicht betrieben, also auch keine Schadstoffe ausgestoßen. Der gleiche Verlauf des Ladezustands E3 liegt im letzten Streckenabschnitt S6 vor, der ebenfalls nicht elektrifiziert ist.

Der anschließende Streckenabschnitt S2 ist ebenfalls nicht elektrifiziert. Im dargestellten Ausführungsbeispiel seien auf diesem Streckenabschnitt S2 eine größere Straßensteigung G und/oder eine höhere Fahrgeschwindigkeit V angenommen als entlang des Streckenabschnitts S1. Demnach steigt der streckenbezogene Energieverbrauch des Traktionsantriebes 2, was sich im Entladen des die Energie bereitstellenden Energiespeichers 3 in einer steiler abfallenden Geraden zeigt. Das Straßenfahrzeug 1 hat einen ersten Teilabschnitt S21 zurückgelegt, bis der Energiespeichers 3 seinen minimalen Ladezustand E3min erreicht hat. Nun übernimmt der Generator 5 die Energieversorgung des Traktionsantriebs 2 während des restlichen, zweiten Teilabschnitts S22 des Streckenabschnitts S2. Die Länge L22 des zweiten Teilabschnitts S22 ergibt sich aus der Differenz der Länge L2 des Streckenabschnitts S2 und der Länge L12 des ersten Teilabschnitts S11, die sich wiederum aus der Division des Ladezustands E3 am Beginn des Streckenabschnitts S2 durch den auf dem ersten Teilabschnitt S11 vorliegenden streckenbezogenen Energieverbrauch E/s des Traktionsantriebs 2 ergibt. Die so ermittelte Länge L22 des zweiten Teilabschnitts S22 bestimmt dann die vom Verbrennungsmotor 4 auf dem Streckenabschnitt S2 emittierte Schadstoffmenge. Diese wird durch Multiplikation der Länge L22 mit dem streckenbezogenen Schadstoffausstoß M/s des Verbrennungsmotors 4 bei der für diesen Teilabschnitt S22 geltenden Straßensteigung G und gefahrenen Geschwindigkeit V.

Zu Beginn des elektrifizierten Streckenabschnitts S3 liegt im Energiespeicher 3 der minimale Ladezustand E3min vor. Durch Kontaktierung der Fahrleitungsanlage 7 wird nun über den Stromabnehmer 6 Energie mit einer vorgegebenen Einspeiseleistung aus der Fahrleitungsanlage 7 in das Straßenfahrzeug 1 übertragen und dem Traktionsantrieb 2 sowie dem Energiespeicher 3 zugeführt. Die Ladeleistung des Energiespeichers 3 ergibt sich aus der Differenz der Einspeiseleistung und der Straßensteigung G und der Fahrgeschwindigkeit V entsprechenden Traktionsleistung, was sich in einem linearen Anstieg des Ladezustand E3 äußert. Der Ladezustand E3 des Energiespeichers 3 am Ende des Streckenabschnitts S3 ergibt sich aus dem Produkt der Ladeleistung mit der Reisezeit für diesen Streckenabschnitt S3, die sich wiederum aus dem Quotienten der Länge L3 des Streckenabschnitts S3 und der gefahrenen Geschwindigkeit V ergibt - es sei denn, die Reisezeit ist so lang, dass der Ladezustand E3 bereits vor Erreichen des Endes des Streckenabschnitts S3 den maximalen Ladezustand E3max erreicht. Letztere Verhältnisse liegen beispielsweise im ebenfalls elektrifizierten Streckenabschnitt S5 vor, wo aufgrund von geringerer Straßensteigung G und/oder geringerer Fahrgeschwindigkeit V eine höhere Ladeleistung für den Energiespeicher 3 zur Verfügung steht.

Auf dem nicht elektrifizierten Streckenabschnitt S4 liegen ähnliche Verhältnisse vor wie auf dem Streckenabschnitt S2. Aufgrund geringerer Straßensteigung G und/oder aufgrund geringerer Fahrgeschwindigkeit V als im Streckenabschnitt S2 fällt der Ladezustand E3 auf dem ersten Teilabschnitt S41 flacher ab, was den zweiten Teilabschnitt S42 verkürzt und damit auch die emittierte Schadstoffmenge reduziert.

Auf den elektrifizierten Streckenabschnitten S3 und S5 können trotz Fahrleitungsanlage 7 Fahrsituationen auftreten, in denen der Verbrennungsmotor 4 Schadstoffe ausstößt, weil der Generator 5 in Betrieb genommen wird. Das kann bei Fahrmanövern erforderlich werden, in denen das Straßenfahrzeug die elektrifizierte Fahrspur verlässt, etwa bei einem längeren Überhohlvorgang, oder bei einem Verkehrsstau, wenn zur Verhinderung einer Überschreitung einer Lastgrenze der Fahrleitungsanlage durch Anfahren einer Vielzahl an Straßenfahrzeugen 1 im selben Streckenabschnitt eine Energieentnahme aus der Fahrleitungsanlage untersagt ist. Diesem Umstand kann durch Berücksichtigung eines Nutzungsgrades Pi der Fahrleitungsanlage 7 auf elektrifizierten Streckenabschnitten Si Rechnung getragen werden, so dass je nach Länge Li dieser Streckenabschnitte Si eine - der Straßensteigung Gi und der Fahrgeschwindigkeit Vi entsprechende - Schadstoffemission angesetzt werden kann.

Liegt am Ende eines Streckenabschnittes Si eine Ladestation 8, so kann dort der Energiespeicher 3 aufgeladen werden, wodurch am Beginn des nachfolgenden Streckenabschnitts Si ein maximaler Ladezustand E3max vorliegt. Die Algorithmen hätten bei dem in FIG 1 dargestellten Straßennetz N ein Routenoption R über K8 bewertet. Hier wird angenommen, dass der Vorteil einer Nutzung der Ladestation 8 die Nachteile der nicht elektrifizierten Streckenabschnitte von K2 nach K8 und von K8 nach K6 nicht überwiegt im Vergleich zur Nutzung der elektrifizierten Streckenabschnitte S3 und S7.

Anhand der Streckenabschnitte Si mit den genannten Parametern wird für die verschiedenen Routenoptionen Rn so zusagen eine Ganglinie der Leistungsart berechnet, welche den maximalen und minimalen Ladezustand E3max und E3min des im Straßenfahrzeug 1 befindlichen Energiespeichers 3, mögliche Ladeintervalle auf den Streckenabschnitten Si und daraus resultierende Reichweiten außerhalb der elektrifizierten Streckenabschnitte Si berücksichtigt. Anhand der Ganglinie der Leistungsart kann so für jede Routenoption Rn der erwartete Anteil an Reisezeit und Weglänge, der nicht elektrisch zurückgelegt wird, und so die zu erwartenden Schadstoffemissionen berechnet werden.

## Patentansprüche

1. Computerimplementiertes Verfahren zur Ermittlung einer Fahrtroute (R) für ein Straßenfahrzeug (1) in einem Straßennetz (N),
- wobei das Straßennetz (N) elektrifizierte Streckenabschnitte (Si), entlang welcher streckenseitige Fahrleitungsanlagen (7) zur Versorgung von Straßenfahrzeugen (1) während der Fahrt mit elektrischer Energie installiert sind, und nicht elektrifizierte Streckenabschnitte (Si) umfasst,
- wobei das Straßenfahrzeug (1) einen elektrischen Traktionsantrieb (2), einen aufladbaren Energiespeicher (3) für elektrische Energie, einen Stromabnehmer (6) zur Einspeisung elektrischer Energie aus der Fahrleitungsanlage (7) und einen Verbrennungsmotor (4), der entweder als alternativer Traktionsantrieb oder als Antrieb eines Generators (5) zur Erzeugung elektrischer Energie für den elektrischen Traktionsantrieb (2) ausgelegt ist, aufweist,
- wobei im Straßenfahrzeug (1) entlang elektrifizierter Streckenabschnitte (Si über den Stromabnehmer (6) eingespeiste elektrische Energie dem Traktionsantrieb (2) und dem Energiespeicher (3) zugeführt wird,
- wobei im Straßenfahrzeug (1) entlang nicht elektrifizierter Streckenabschnitte (Si) dem Traktionsantrieb (2) elektrische Energie aus dem Energiespeicher (3) zugeführt und ab Erreichen seines minimalen Ladezustands (E3min) der Verbrennungsmotor (2) aktiviert, um diesen je nach Auslegung entweder als Antrieb für den Generator (5) oder ohne Zwischenschaltung eines Generators direkt als alternativen Traktionsantrieb zu verwenden,
**gekennzeichnet durch** folgende Schritte:
- Vorgeben eines Startortes und eines Zielortes der zu ermittelnden Fahrtroute (R) (Schritt 10),
- Bestimmen von den Startort mit dem Zielort durch eine Folge von aneinandergesetzten Streckenabschnitten (si) verbindenden Routenoptionen (Rn) (Schritt 20),
- für jede der bestimmten Routenoptionen (Rn): Berechnen der vom Verbrennungsmotor (4) emittierten Schadstoffmenge entlang nicht elektrifizierter Streckenabschnitte (Si) einer Routenoption (Rn) (Schritt 30 und 40), und
- Ausgeben der Routenoption (Rn) mit der geringsten emittierten Schadstoffmenge als ermittelte Fahrtroute (R) (Schritt 50) .

2. Verfahren nach Anspruch 1,
- wobei die entlang eines nicht elektrifizierten Streckenabschnitts (Si) emittierte Schadstoffmenge aus einer Länge (Li2) eines zweiten Teilabschnittes (Si2) des Streckenabschnitts (Si), entlang dessen der Verbrennungsmotor (4) aktiviert ist, und aus einem streckenbezogenen Schadstoffausstoß (M/s) des Verbrennungsmotors (4) berechnet wird.

3. Verfahren nach Anspruch 2,
- wobei die Länge (Li2) des zweiten Teilabschnittes (Si2) aus einer Länge (Li1) eines ersten Teilabschnitts (Si1) des Streckenabschnitts (Si), entlang dessen dem Traktionsantrieb (2) Energie aus dem Energiespeicher (3) zugeführt wird, aus einem Ladezustand (E3) des Energiespeichers (3) am Beginn des Streckenabschnitts (Si) und aus einem streckenbezogenen Energieverbrauch (E/s) des Traktionsantriebs (2) berechnet wird.

4. Verfahren nach Anspruch 3,
- wobei der Ladezustand (E3) des Energiespeichers (3) am Ende eines elektrifizierten Streckenabschnitts (Si) aus dem Ladezustand (E3) am Beginn des Streckenabschnitts (Si) und der auf dem Streckenabschnitt (Si) dem Energiespeicher (3) aus der Fahrleitungsanlage (7) zugeführten Energie berechnet wird.

5. Verfahren nach einem der Ansprüche 2 bis 4,
- wobei der Schadstoffausstoß (M/s) des Verbrennungsmotors (4) und/oder der Energieverbrauch (E/s) des Traktionsantriebs (2) in Abhängigkeit einer Straßensteigung (G) bereitgestellt wird und
- wobei die auf dem nicht elektrifizierten Streckenabschnitt (Si) emittierte Schadstoffmenge zusätzlich aus einem Steigungsprofil (Gi(X)) des Streckenabschnitts (Si), welches den Verlauf der Straßensteigung Gi entlang des Streckenabschnitts (Si) wiedergibt, berechnet wird.

6. Verfahren nach einem der Ansprüche 2 bis 5,
- wobei der Schadstoffausstoß (M/s) des Verbrennungsmotors (4) und/oder der Energieverbrauch (E/s) des Traktionsantriebs (2) in Abhängigkeit einer Fahrgeschwindigkeit (V) des Straßenfahrzeugs (1) bereitgestellt wird und
- wobei die entlang des nicht elektrifizierten Streckenabschnitts (Si) emittierte Schadstoffmenge aus einem Geschwindigkeitsprofil (Vi(X)) des Streckenabschnitts (Si), welches den Verlauf der erwarteten Fahrgeschwindigkeit (Vi) des Straßenfahrzeugs (1) auf dem Streckenabschnitt (Si) wiedergibt, berechnet wird.

7. Verfahren nach Anspruch 6,
- wobei das Geschwindigkeitsprofil (Vi(X)) des Streckenabschnitts (Si) in Abhängigkeit der aktuellen Verkehrssituation auf dem Streckenabschnitt (Si) vorgegeben wird.

8. Verfahren nach einem der Ansprüche 1 bis 7,
- wobei für jede der bestimmten Routenoptionen (Rn) zusätzlich die vom Verbrennungsmotor (4) emittierte Schadstoffmenge entlang elektrifizierter Streckenabschnitte (Si) einer Routenoption (Rn) aus einem vorgegebenen Nutzungsgrad (Pi) der Fahrleitungsanlage (7) durch das Straßenfahrzeug (1) berechnet wird.

9. Verfahren nach einem der Ansprüche 1 bis 8,
- wobei am Beginn wenigstens eines Teils von Streckenabschnitten (Si) des Straßennetzes (N) straßenseitige Ladestationen (8) installiert sind, an welchen Energiespeichern (3) von Straßenfahrzeugen (1) im Stillstand Energie zugeführt werden kann, wodurch die vom Verbrennungsmotor (4) emittierte Schadstoffmenge entlang eines durch Aufladen des Energiespeichers (3) verkürzten, zweiten Teilabschnitts (Si2) eines nicht elektrifizierten Streckenabschnitts (Si) reduzierbar ist,
- wobei bei der Berechnung der Schadstoffemission entlang einer Routenoption (Rn) die Lademöglichkeit des Energiespeichers (3) an entlang dieser Routenoption (Rn) installierten Ladestationen (8) berücksichtigt wird, und
- wobei mit der Fahrtroute (R) die zur Reduzierung der Schadstoffemissionen durch das Straßenfahrzeug (1) zu nutzenden Ladestationen (8) ausgegeben werden.

10. Daten verarbeitendes System mit einem Computer oder Computernetzwerk zur Durchführung eines Verfahrens nach einem der Ansprüche 1 bis 9.

11. Computerprogramm-Produkt mit Instruktionen, welche bei Ausführung durch einen Computer oder ein System, den Computer oder das System dazu veranlassen, das Verfahren nach einem der Ansprüche 1 bis 9 durchzuführen.

12. Computerlesbares Speichermedium, auf welchem Instruktionen gespeichert sind, welche bei Ausführung durch einen Computer oder ein System, den Computer oder das System dazu veranlassen, das Verfahren nach einem der Ansprüche 1 bis 9 durchzuführen.

13. Datenstrom, welcher repräsentativ für ein Computerprogramm-Produkt nach Anspruch 11 ist.
